# EUROPÄISCHE PATENTSCHRIFT

(11) **EP 2 811 219 B1**
(45) Veröffentlichungstag und Bekanntmachung des Hinweises auf die Patenterteilung: **15.04.2020**
(21) Anmeldenummer: 14167310.3
(22) Anmeldetag: 07.05.2014
(51) Int. Cl.: F21S 43/00

(54) **Beleuchtungskörper für ein Fahrzeug**
Lighting fixture for a vehicle
Lampe pour un véhicule

(30) Priorität: 07.06.2013 AT 503752013
(43) Veröffentlichungstag der Anmeldung: 10.12.2014
(73) Patentinhaber: ZKW Group GmbH, 3250 Wieselburg (AT)
(72) Erfinder: Zubaj, Andrej, 95632 Nadlice (SK); Belan, Michal, 95618 Bosany (SK); Jelinek, Oldrich, 05205 Spisska Nova Ves (SK)
(74) Vertreter: Patentanwaltskanzlei Matschnig & Forsthuber OG

(56) Entgegenhaltungen:
- EP-A1- 2 317 352
- WO-A1-00/42456
- DE-A1- 10 256 197
- DE-A1-102007 010 023
- DE-A1-102008 056 121
- JP-A- 2011 126 486
- US-A1- 2004 179 358
- US-A1- 2004 184 276

## Beschreibung

Die Erfindung betrifft einen Beleuchtungskörper für ein Fahrzeug mit einem länglichen Lichtleiterelement und einem Grundkörper für die Festlegung des Lichtleiterelements, wobei das Lichtleiterelement mittels eines beiderseits des Lichtleiterelements am Grundkörper festlegbaren Klemmelements klemmend am Grundkörper festlegbar ist.

Beleuchtungskörper der eingangs genannten Art werden bei modernen Fahrzeugen häufig für Tagfahrlicht und/oder als Positionslicht eingesetzt, wie dies beispielsweise in der EP 1 418 087 A2 beschrieben ist. Dieses Dokument zeigt und beschreibt einen Fahrzeugscheinwerfer, bei dem ein Lichtleiterelement ein Hauptlicht des Scheinwerfers, etwa das Abblendlicht, ringförmig umgibt. Die Festlegung dieses Lichtleiters erfolgt dort mit mehreren am Lichtleiterelement angeordneten Rastnasen, die mit entsprechenden Gegenstücken an einem Abdeckelement des Scheinwerfers verrasten. Nachteilig ist hierbei, wie auch bei weiteren bekannten Vorrichtungen dieser Art, dass Rastnasen oder andere Fixiervorrichtungen auf den beschriebenen Lichtleiterelementen, die in aller Regel aus hochtransparenten Kunststoffen hergestellt sind, von aussen als Inhomogenitäten sichtbar sind, was seitens der Fahrzeughersteller unerwünscht ist. Darüber hinaus ist die Herstellung von Lichtleiterelementen mit Rastnasen aufgrund komplexerer Werkzeuge für den Spritzguss relativ aufwendig. Auch bei anderen Methoden der Festlegung wie etwa Festlegen durch Schrauben oder Kleben kommt es zu den unerwünschten Inhomogenitäten, was durch die vorliegende Erfindung vermieden wird. WO 00/42456 offenbart einen Beleuchtungskörper für ein Fahrzeug.

Es ist daher Aufgabe der vorliegenden Erfindung, einen Beleuchtungskörper der eingangs genannten Art dahingehend zu verbessern, dass eine Beeinträchtigung des äusseren Erscheinungsbildes durch die Befestigungsmittel bei gleichzeitig zuverlässiger und stabiler Befestigung des Lichtleiterelements an einem Grundkörper oder einem mit einem Grundkörper funktionsgleichen Bauteil eines Beleuchtungskörpers vermieden wird.

Zur Lösung dieser Aufgabe ist ein Beleuchtungskörper der eingangs genannten Art erfindungsgemäß dahingehend weitergebildet, dass das Lichtleiterelement und das Klemmelement von einer am Grundkörper festgelegten Abdeckung überdeckt sind, die das Klemmelement in einer das Lichtleiterelement festklemmenden Position hält.

Das Lichtleiterelement, welches an einem oder beiden Enden desselben eingekoppeltes Licht mit Hilfe von im Lichtleiterelement ausgebildeten Streukörpern gleichmäßig entlang seiner Längserstreckung auskoppelt, kann bei diesem erfindungsgemäßen Beleuchtungskörper ohne das äußere Erscheinungsbild beeinträchtigende Befestigungsmittel ausgebildet und lediglich durch die Klemmwirkung des Klemmelements am Grundkörper festgehalten sein. Dies ermöglicht eine zuverlässige Befestigung des Lichtleiterelements am Grundkörper und ein besonders homogenes Leuchtbild des Lichtleiterelements. Die erfindungsgemäße Abdeckung schützt einerseits den Beleuchtungskörper vor Nässe und Verschmutzung und kann andererseits so ausgeformt sein, dass die Festlegung der Abdeckung am Grundkörper zu einer weiteren Fixierung des Klemmelements am Grundkörper führt, wenn beispielsweise sowohl Klemmelement als auch Abdeckung in ein und derselben Nut am Grundkörper festgelegt werden.

Prinzipiell kann es ausreichend sein, wenn das Klemmelement nur mit einem oder wenigen Teilbereichen der Längserstreckung des Lichtleiterelements in Wirkverbindung steht. Bevorzugt ist es jedoch vorgesehen, dass sich das Klemmelement im Wesentlichen über die gesamte Länge des Lichtleiterelements erstreckt. Somit ist wiederum der gleichmäßigen Erscheinung des Beleuchtungskörpers sowie der zuverlässigen Festlegung des Lichtleiterelements gedient.

Gemäß einer bevorzugten Variante der vorliegenden Erfindung ist es vorgesehen, dass das Klemmelement als Blende ausgebildet ist, die das Lichtleiterelement umgreift und teilweise überdeckt. Das Klemmelement begrenzt und bedeckt hierbei das Lichtleiterelement an seinen Rändern und gibt bei entsprechender Dimensionierung des überlappenden Bereichs der Blende nur jenen Teil des Lichtleiterelements frei, in dem eine optimale seitliche Auskoppelung des Lichts erfolgt.

Die Festlegung des Lichtleiterelements durch die Klemmwirkung des Klemmelements ist überaus effektiv und gestattet eine dauerhafte Festlegung zu besonders geringen Kosten. Eine Verbesserung der Festlegung kann jedoch gemäß einer bevorzugten Ausführungsform der vorliegenden Erfindung erfolgen, wenn das Klemmelement an seinen dem Lichtleiterelement zugewandten Flächen eine Mehrzahl von in ihrer Form der Aussenfläche des Lichtleiterelements entsprechenden Rippen aufweist, die das Lichtleiterelement zumindest teilweise umgreifen. In diesem Fall wird das Lichtleiterelement teilweise vom Klemmelement umgriffen und daher besonders sicher mit dem Grundkörper verbunden.

Während sich das Klemmelement zu beiden Seiten des Lichtleiterelements entlang der Längserstreckung desselben erstreckt und dieses sichert, ist gemäß einer bevorzugten Ausführungsform der vorliegenden Erfindung daran gedacht, dass das Klemmelement einen Anschlag für das Lichtleiterelement zumindest an einer der Stirnseiten des Lichtleiterelements aufweist. Ein Anschlag an zumindest einer der Stirnseiten des Lichtleiterelements verhindert, dass das Lichtleiterelement während des Betriebs des Fahrzeugs aufgrund von Vibrationen im Klemmelement wandert und sich dadurch vom Klemmelement löst. An der anderen Stirnseite des Lichtleiterelements kann der Anschlag auch von einer Lichteinkoppelstelle gebildet sein, die wiederum mit einem Anschlag am Klemmelement zusammenwirkt. Es kann auch vorgesehen sein, dass beide Stirnseiten des Lichtleiterelement als Lichteinkoppelstellen ausgebildet sind und diese Lichteinkoppelstellen mit entsprechenden Anschlägen am Klemmelement zusammenwirken.

Zur weiteren Verbesserung der Lagerung des Lichtleiterelement ist der erfindungsgemäße Beleuchtungskörper bevorzugt dahingehend weitergebildet, dass dem Klemmelement zumindest ein am Grundkörper angeordnetes Stützelement für das Lichtleiterelement zum klemmenden Festlegen des Lichtleiterelements zugeordnet ist. Das Stützelement, welches in aller Regel in seiner äußeren Form der Form des Lichtleiterelements angepasst ist, verhindert zusätzlich, dass das Lichtleiterelement aus dem Klemmelement fallen kann, und hält das Lichtleiterelement beim Zusammenbau exakt in jener Position, in der das Klemmelement das Lichtleiterelement umgreifen kann.

Um den Zusammenbau der einzelnen Teile des erfindungsgemäßen Beleuchtungskörpers weiter zu vereinfachen, ist die Erfindung bevorzugt dahingehend weitergebildet, dass das Lichtleiterelement zumindest eine Rastnase aufweist, die mit einem entsprechenden Gegenstück am Grundkörper rastend zusammenwirkt. Gemäß dieser bevorzugten Variante liegt das Lichtleiterelement nicht nur auf dem zumindest einen Stützelement auf, sondern wird zusätzlich durch die Rastnase gesichert, sodass sich das Lichtleiterelement vor der Festlegung durch das Klemmelement nicht von dem Grundkörper, insbesondere von dem zumindest einen Stützelement abheben kann. Die Rastnase dient jedoch lediglich der provisorischen Befestigung vor und während des Zusammenbaus des erfindungsgemäßen Beleuchtungskörpers und trägt nicht oder nur unwesentlich zur endgültigen Festlegung des Lichtleiterelements bei.

Gemäß einer bevorzugten Ausführungsform der vorliegenden Erfindung ist der Beleuchtungskörper dahingehend weitergebildet, dass das Klemmelement zumindest eine Rastnase aufweist, die mit einem entsprechenden Gegenstück am Grundkörper rastend zusammenwirkt. Dies gewährleistet eine formschlüssige Festlegung des Klemmelements und einen schnellen Zusammenbau des erfindungsgemäßen Beleuchtungskörpers.

Prinzipiell kann der erfindungsgemäße Beleuchtungskörper als eigenständiger Bauteil ausgebildet sein, der auf jede erdenkliche Art mit einem Fahrzeug verbunden wird. Es ist jedoch bevorzugt, dass der Grundkörper einstückig mit einem Fahrzeugteil, insbesondere einem Stoßfänger ausgebildet oder mit diesem verbindbar ist. Gemäß dieser bevorzugten Ausführungsform der vorliegenden Erfindung kann bereits der Stoßfänger, der in der Regel ein Spritzgußteil ist, den Grundkörper ausbilden oder entsprechende Aufnahmen für den Grundkörper bereitstellen, sodass das Klemmelement, das Lichtleiterelement und gegebenenfalls die Abdeckung direkt auf dem Stoßfänger festgelegt oder mit diesem verbunden werden können. Weiters ist es auch denkbar, dass der erfindungsgemäße Beleuchtungskörper in einem Scheinwerfer am Rande desselben verbaut ist, wobei in diesem Fall die Abdeckscheibe des Scheinwerfers als Abdeckung im Sinne der vorliegenden Erfindung fungiert. Der Einbau in einem Fahrzeugscheinwerfer kann jedoch auch als ringförmiger Beleuchtungskörper rund um eine Hauptlichtfunktion, wie beispielsweise das Abblendlicht erfolgen, in welchem Fall eine eigene nicht Abdeckung erforderlich ist. Allerdings muss dann, um das Lichtleiterelement festzulegen, das Klemmelement bzw. die Blende über Rastmittel wie zum Beispiel Rastnasen verfügen

Die Erfindung wird nachfolgend anhand eines in der Zeichnung schematisch dargestellten Ausführungsbeispiels näher erläutert. In dieser zeigen
Fig. 1 eine Draufsicht auf eine erfindungsgemäßen Beleuchtungskörper,
Fig. 2 eine perspektivische Ansicht des Grundkörpers und des Lichtleiterelement des erfindungsgemäßen Beleuchtungskörpers,
Fig. 3 eine perspektivische Ansicht gemäß Fig. 2 mit aufgesetztem Klemmelement,
Fig. 4 eine Schnittdarstellung durch den erfindungs gemäßen Beleuchtungskörper,
Fig. 5 eine Schnittdarstellung durch einen alternativen Beleuchtungskörper gemäß der vorliegenden Erfindung,
Fig. 6 eine perspektivische Ansicht einer bevorzugten Ausführungsform des Klemmelements,
Fig. 7 eine Schnittdarstellung einer bevorzugten Ausführungsform des Klemmelements gemäß Fig. 6 mit eingeklemmtem Lichtleiterelement und
Fig. 8 eine perspektivische Ansicht eines Anschlags an der Blende an einer Stirnseite des Lichtleiterelements.

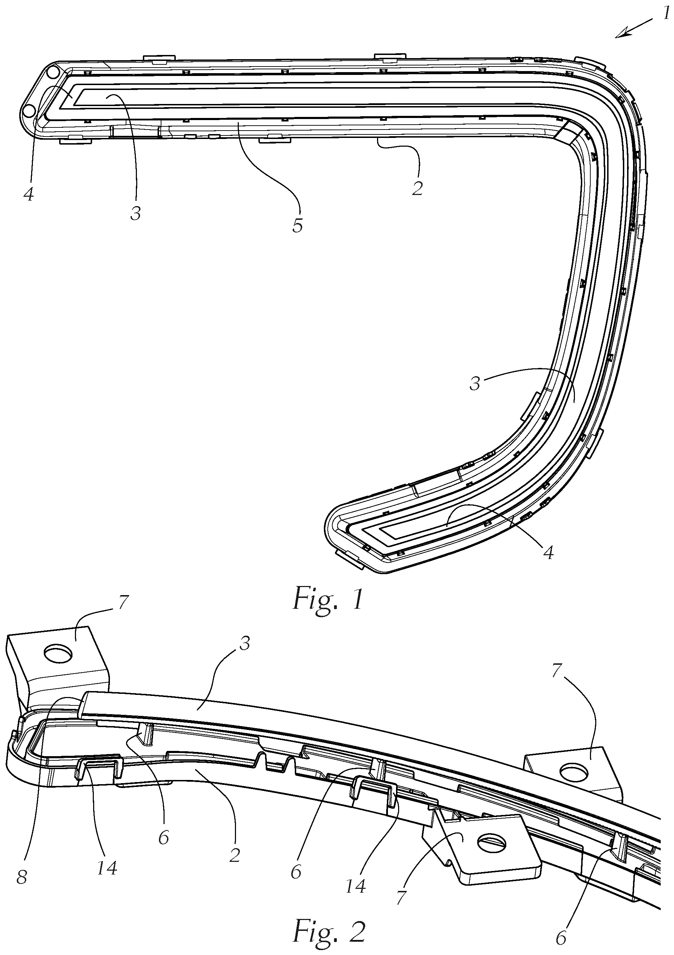

In Fig. 1 ist ein erfindungsgemäßer Beleuchtungskörper mit 1 bezeichnet. Der Beleuchtungskörper 1 besteht im Wesentlichen aus einem Grundkörper 2, einem Lichtleiterelement 3, einem Klemmelement bzw. einer Blende 4 und einer Abdeckung 5, wobei der Grundkörper 2 mittels nicht näher dargestellter Befestigungsvorrichtungen beispielsweise mit einem Stoßfänger eines Fahrzeugs verbunden werden kann oder auch einstückig mit diesem ausgebildet sein kann, um Licht über die gesamte Länge des Lichtleiterelements 3 abzustrahlen.

In Fig. 2 sind nun lediglich der Grundkörper 2 und das Lichtleiterelement 3 dargestellt und es ist zu erkennen, dass das Lichtleiterelement 3 auf Stützelementen 6 aufliegt, die auf dem Grundkörper 2 ausgeformt sind. Mit 7 sind Befestigungsvorrichtungen des Beleuchtungskörpers 1 bezeichnet. Eine Stirnseite des Lichtleiterelements 3 ist mit 8 bezeichnet.

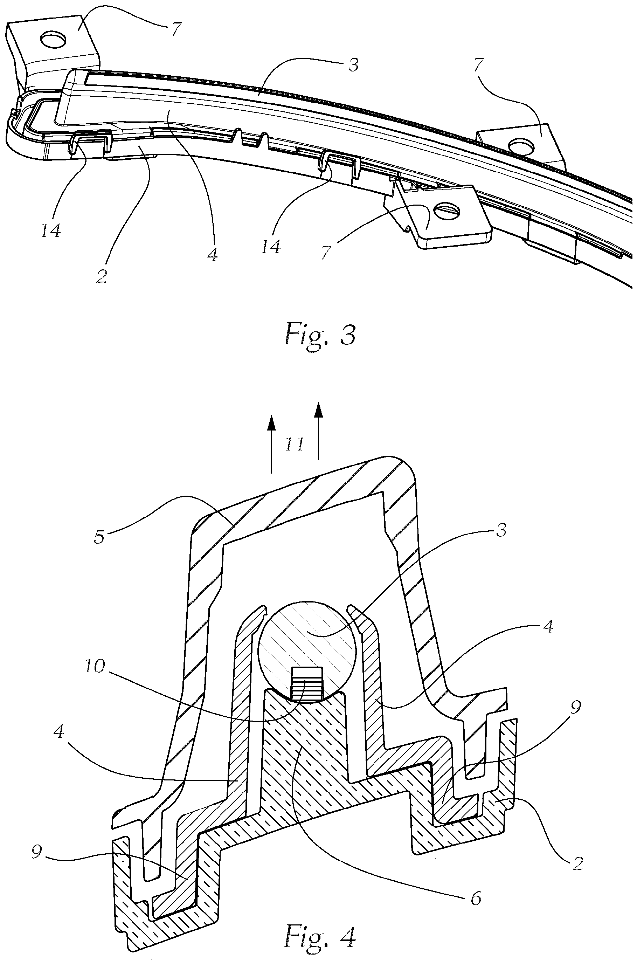

Fig. 3 entspricht Fig. 2 mit dem Unterschied, dass das Klemmelement bzw. die Blende 4 auf den Grundkörper aufgesetzt ist, um das Lichtleiterelement 3 auf dem Grundkörper 2 festzulegen. Die Blende 4 weist hierzu Fortsätze 9 auf, die in entsprechende Ausnehmungen am Grundkörper 2 eingreifen.

In der Schnittdarstellung nach Fig. 4 sind nun alle wesentlichen Teile des erfindungsgemäßen Beleuchtungskörpers 1 erkennbar. Das Stützelement 6 am Grundkörper 2 bildet ein Auflager für das Lichtleiterelement 3, welches vom Klemmelement 4 klemmend festgehalten ist. Das Klemmelement 4 ruht mit dem Fortsätzen 9 im Grundkörper und wird in der entsprechenden Ausnehmung durch die Abdeckung 5, die beim Zusammenbau eingeklebt wird, gehalten. Die Abdeckung 5 kann auch mithilfe von Rastelementen in der entsprechenden Ausnehmung festgelegt sein, wofür Gegenstücke 14 vorgesehen sein können, wie dies in den Figuren 2 und 3 zu erkennen ist. Bevorzugt ist es jedoch, dass die Abdeckung 5 festgeklebt wird, bzw. Dass diese Festlegungsvarianten kombiniert werden. Die Abdeckung ist vollständig oder teilweise transparent, jedoch zumindest im Bereich der Lichtauskoppelfläche des Lichtleiterelements vollständig transparent. In Fig. 4 ist deutlich zu erkennen, dass das Lichtleiterelement 3 Streukörper 10 aufweist, die dazu dienen, entlang der Längsachse des Lichtleiterelements 3 geführtes Licht senkrecht zur Längsachse auszukoppeln, wie dies durch die Pfeile 11 versinnbildlicht ist.

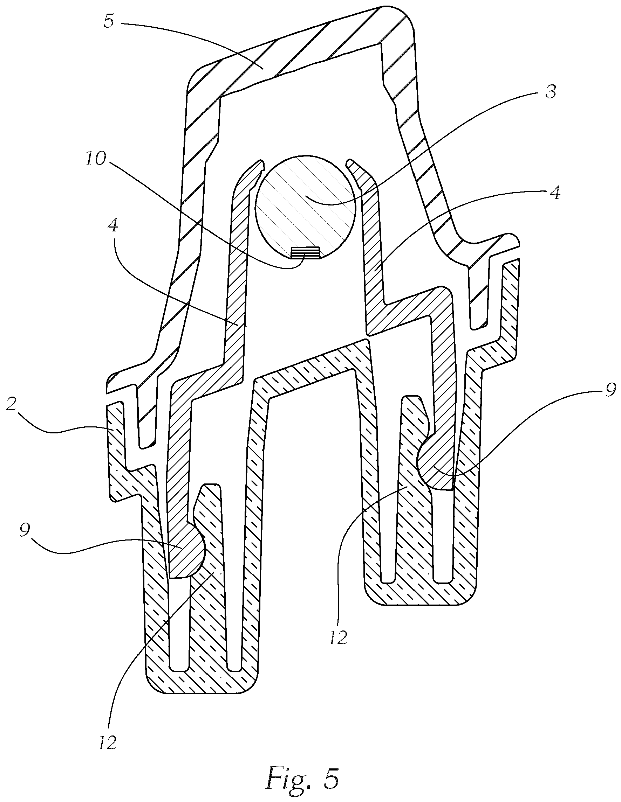

Bei der alternativen Ausführungsform, die in Fig. 5 dargestellt ist, ist zu erkennen, dass die Fortsätze 9 des Klemmelements 4 als Rastnasen ausgebildet sein können, die mit entsprechenden Gegenstücken 12 am Grundkörper 2 zusammenwirken und eine Verrastung des Klemmelements 4 am Grundkörper 2 bewirken.

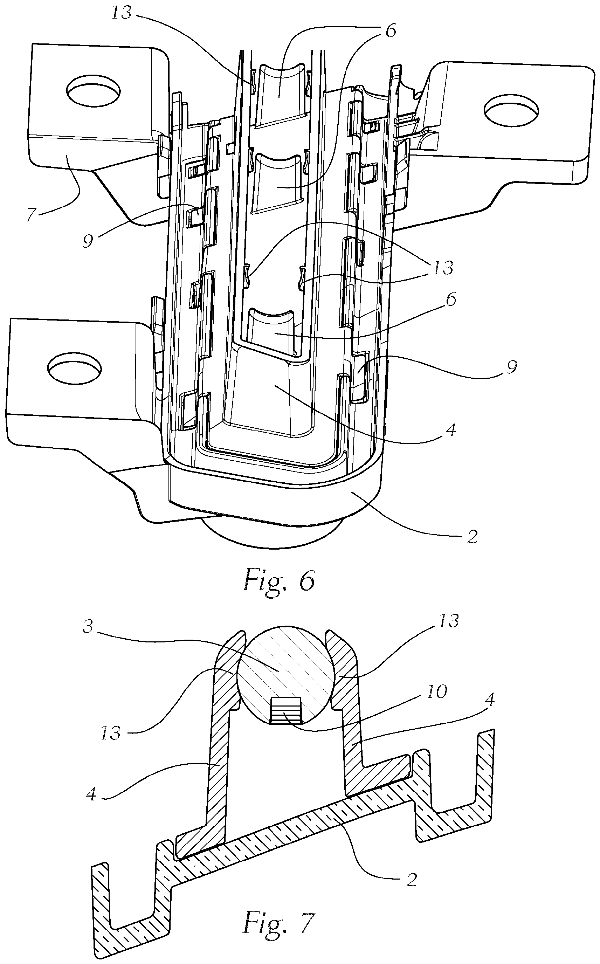

In Fig. 6 sind eine Mehrzahl von Rippen 13 zu erkennen, die am Klemmelement 4 an seinen dem Lichtleiterelement 3 zugewandten Flächen angeordnet sind und in ihrer Form der Aussenfläche des Lichtleiterelements 3 entsprechen, wobei diese Rippen 13 das Lichtleiterelement 3 zumindest teilweise umgreifen (siehe Fig. 7).

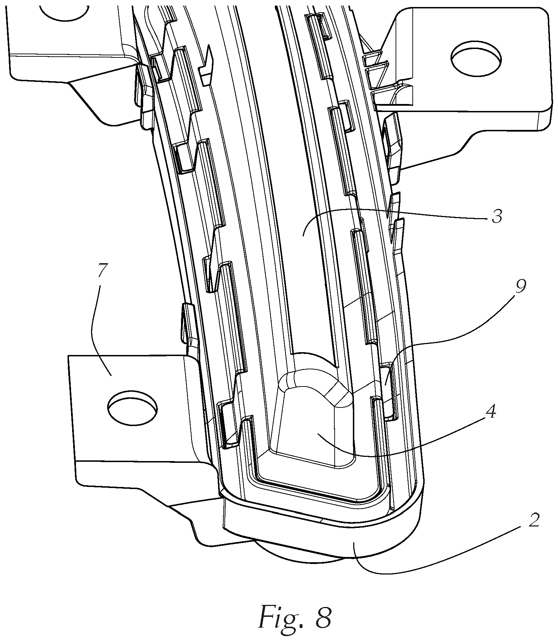

Fig. 8 zeigt die Blende bzw. Das Klemmelement 4 an einer Stirnseite des Lichtleiterelements 3 und lässt erkennen, dass hier ein Anschlag für die Stirnseite des Lichtleiterelements 3 gebildet wird, der ein Verrutschen des Lichtleiterelements 3 in Längsrichtung des Lichtleiterelements 3 verhindert.

## Patentansprüche

1. Beleuchtungskörper (1) für ein Fahrzeug mit einem länglichen Lichtleiterelement (3) und einem Grundkörper (2) für die Festlegung des Lichtleiterelements (3), wobei das Lichtleiterelement (3) mittels eines beiderseits des Lichtleiterelements (3) am Grundkörper (2) festlegbaren Klemmelements (4) klemmend am Grundkörper (2) festlegbar ist, **dadurch gekennzeichnet, dass** das Lichtleiterelement (3) und das Klemmelement (4) von einer am Grundkörper (2) festgelegten Abdeckung (5) überdeckt sind, die das Klemmelement (4) in einer das Lichtleiterelement (3) festklemmenden Position hält.

2. Beleuchtungskörper nach Anspruch 1, **dadurch gekennzeichnet, dass** sich das Klemmelement (4) im Wesentlichen über die gesamte Länge des Lichtleiterelements (3) erstreckt.

3. Beleuchtungskörper nach Anspruch 1 oder 2, **dadurch gekennzeichnet, dass** das Klemmelement (4) als Blende ausgebildet ist, die das Lichtleiterelement (3) umgreift und teilweise überdeckt.

4. Beleuchtungskörper nach einem der Ansprüche 1 bis 3, **dadurch gekennzeichnet, dass** das Klemmelement (4) an seinen dem Lichtleiterelement (3) zugewandten Flächen eine Mehrzahl von in ihrer Form der Aussenfläche des Lichtleiterelements (3) entsprechenden Rippen (13) aufweist, die das Lichtleiterelement (3) zumindest teilweise umgreifen.

5. Beleuchtungskörper nach einem der Ansprüche 1 bis 4, **dadurch gekennzeichnet, dass** das Klemmelement (4) einen Anschlag für das Lichtleiterelement (3) zumindest an einer der Stirnseiten des Lichtleiterelements (3) aufweist.

6. Beleuchtungskörper nach einem der Ansprüche 1 bis 5, **dadurch gekennzeichnet, dass** dem Klemmelement (4) zumindest ein am Grundkörper (2) angeordnetes Stützelement (6) für das Lichtleiterelement (3) zum klemmenden Festlegen des Lichtleiterelements (3) zugeordnet ist.

7. Beleuchtungskörper nach einem der Ansprüche 1 bis 6, **dadurch gekennzeichnet, dass** das Lichtleiterelement (3) zumindest eine Rastnase aufweist, die mit einem entsprechenden Gegenstück am Grundkörper (2) rastend zusammenwirkt.

8. Beleuchtungskörper nach einem der Ansprüche 1 bis 7, **dadurch gekennzeichnet, dass** das Klemmelement (4) zumindest eine Rastnase (9) aufweist, die mit einem entsprechenden Gegenstück (12) am Grundkörper rastend zusammenwirkt.

9. Beleuchtungskörper nach einem der Ansprüche 1 bis 8, **dadurch gekennzeichnet, dass** der Grundkörper (2) einstückig mit einem Fahrzeugteil, insbesondere einem Stoßfänger ausgebildet oder mit diesem verbindbar ist.

## Claims

1. Lighting body (1) for a vehicle with an elongated light guide element (3) and a base body (2) for fixing the light guide element (3), wherein the light guide element (3) can be fixed to the base body (2) in a clamping manner by means of a clamping element (4) which can be fixed on both sides of the light guide element (3) on the base body (2), **characterised in that** the light guide element (3) and the clamping element (4) are covered by a cover (5) fixed to the base body (2), which holds the clamping element (4) in a position clamping the light guide element (3).

2. Lighting fixture according to claim 1, **characterised in that** the clamping element (4) extends substantially over the entire length of the light guide element (3).

3. Lighting fixture according to claim 1 or 2, **characterized in that** the clamping element (4) is designed as a cover which surrounds and partially covers the light guide element (3).

4. Lighting fixture according to any one of claims 1 to 3, **characterized in that** the clamping element (4) has on its surfaces facing the light guide element (3) a plurality of ribs (13) corresponding in shape to the outer surface of the light guide element (3), which at least partially surround the light guide element (3).

5. Lighting fixture according to one of claims 1 to 4, **characterized in that** the clamping element (4) has a stop for the light guide element (3) at least on one of the end faces of the light guide element (3).

6. Lighting fixture according to one of claims 1 to 5, **characterised in that** at least one support element (6) for the light guide element (3), arranged on the base body (2), is associated with the clamping element (4) for clampingly fixing the light guide element (3).

7. Lighting fixture according to any one of claims 1 to 6, **characterized in that** the light guide element (3) has at least one latching lug which cooperates in a latching manner with a corresponding counterpart on the base body (2).

8. Lighting fixture according to one of the claims 1 to 7, **characterized in that** the clamping element (4) has at least one latching lug (9) which cooperates in a latching manner with a corresponding counterpart (12) on the base body.

9. Lighting fixture according to one of the claims 1 to 8, **characterized in that** the base body (2) is formed in one piece with a vehicle part, in particular a bumper, or can be connected thereto.

## Revendications

1. Corps d'éclairage (1) pour un véhicule avec un élément de guidage de la lumière (3) allongé et un corps de base (2) pour la fixation de l'élément de guidage de la lumière (3), l'élément de guidage de la lumière (3) pouvant être fixé par serrage sur le corps de base (2) au moyen d'un élément de serrage (4) qui peut être fixé des deux côtés de l'élément de guidage de la lumière (3) sur le corps de base (2), **caractérisé en ce que** l'élément de guidage de la lumière (3) et l'élément de serrage (4) sont recouverts par un couvercle (5) fixé au corps de base (2), qui maintient l'élément de serrage (4) dans une position serrant l'élément de guidage de la lumière (3).

2. Appareil d'éclairage selon la revendication 1, **caractérisé en ce que** l'élément de serrage (4) s'étend sensiblement sur toute la longueur de l'élément de guidage de la lumière (3).

3. Appareil d'éclairage selon la revendication 1 ou 2, **caractérisé en ce que** l'élément de serrage (4) est conçu comme un couvercle qui entoure et recouvre partiellement l'élément de guidage de la lumière (3).

4. Appareil d'éclairage selon l'une quelconque des revendications 1 à 3, **caractérisé en ce que** l'élément de serrage (4) présente sur ses surfaces tournées vers l'élément de guidage de la lumière (3) une pluralité de nervures (13) dont la forme correspond à la surface extérieure de l'élément de guidage de la lumière (3) et qui entourent au moins partiellement l'élément de guidage de la lumière (3).

5. Appareil d'éclairage selon l'une des revendications 1 à 4, **caractérisé en ce que** l'élément de serrage (4) présente une butée pour l'élément de guidage de la lumière (3) au moins sur l'une des faces frontales de l'élément de guidage de la lumière (3).

6. Appareil d'éclairage selon l'une des revendications 1 à 5, **caractérisé en ce qu'**au moins un élément de support (6) pour l'élément de guidage de la lumière (3), disposé sur le corps de base (2), est associé à l'élément de serrage (4) pour la fixation par serrage de l'élément de guidage de la lumière (3).

7. Appareil d'éclairage selon l'une des revendications 1 à 6, **caractérisé en ce que** l'élément de guidage de la lumière (3) présente au moins une patte d'encliquetage qui coopère de manière encliquetable avec une contrepartie correspondante sur le corps de base (2).

8. Appareil d'éclairage selon l'une des revendications 1 à 7, **caractérisé en ce que** l'élément de serrage (4) présente au moins une patte d'encliquetage (9) qui coopère par encliquetage avec une contrepartie correspondante (12) sur le corps de base.

9. Appareil d'éclairage selon l'une des revendications 1 à 8, **caractérisé en ce que** le corps de base (2) est formé d'une seule pièce avec une partie du véhicule, en particulier un pare-chocs, ou peut être relié à celui-ci.
